(19) Europäisches Patentamt
European Patent Office
Office européen des brevets

(11) **EP 4 279 518 B1**

(12) **EUROPÄISCHE PATENTSCHRIFT**

(45) Veröffentlichungstag und Bekanntmachung des Hinweises auf die Patenterteilung:
**01.05.2024   Patentblatt 2024/18**

(21) Anmeldenummer: **22174000.4**

(22) Anmeldetag: **18.05.2022**

(51) Internationale Patentklassifikation (IPC):
**C08G 18/00** (2006.01)  **C08G 18/28** (2006.01)
**C08G 18/38** (2006.01)  **C08G 18/76** (2006.01)
**C09J 175/04** (2006.01)  **B27N 3/00** (2006.01)
**B27N 3/02** (2006.01)  **B27N 1/02** (2006.01)

(52) Gemeinsame Patentklassifikation (CPC):
**B27N 1/0209; B27N 3/002; B27N 3/02;
C08G 18/003; C08G 18/289; C08G 18/3893;
C08G 18/7621; C08G 18/7664; C08G 18/7671;
C09J 175/04**

(54) **VERFAHREN ZUR HERSTELLUNG EINER OSB-HOLZWERKSTOFFPLATTE**

METHOD FOR MANUFACTURING AN OSB WOODEN PANEL

PROCÉDÉ DE FABRICATION D'UN PANNEAU EN MATÉRIAU DÉRIVÉ DU BOIS À PARTICULES ORIENTÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.11.2023   Patentblatt 2023/47**

(73) Patentinhaber: **SWISS KRONO Tec AG**
**6004 Luzern (CH)**

(72) Erfinder:
• **Kalwa, Norbert**
**32805 Horn-Bad Meinberg (DE)**
• **Hirschberg, Maik**
**06308 Benndorf (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A1- 3 020 524    EP-A1- 3 067 402
EP-A1- 3 995 538    US-A1- 2010 087 571**

**Beschreibung**

Die vorliegende Erfindung betrifft ein Verfahren zur Herstellung einer OSB-Holzwerkstoffplatte.

Grobspanplatten, auch OSB (oriented strand board) genannt, sind Holzwerkstoffplatten, die aus langen Spänen (strands) hergestellt werden. Die ursprünglich als Abfallprodukte der Furnier- und Sperrholzindustrie anfallenden OSB werden jedoch zunehmend im Holz- und Fertighausbau eingesetzt, da OSB leicht sind und trotzdem die an Bauplatten gesetzten statischen Anforderungen erfüllen. So werden OSB als Bauplatten und als Wand- oder Dachbeplankung oder auch im Fußbodenbereich eingesetzt.

Die Herstellung der OSB erfolgt in einem mehrstufigen Prozess, wobei zunächst die Späne oder Strands aus entrindetem Rundholz, bevorzugt Nadelhölzer, in Längsrichtung durch rotierende Messer abgeschält werden. Im sich anschließenden Trocknungsvorgang wird die natürliche Feuchtigkeit der Strands bei hohen Temperaturen reduziert. Der Feuchtigkeitsgrad der Strands kann je nach verwendeten Klebstoff variieren, wobei sich die Feuchtigkeit deutlich unter 10% bewegen sollte, um Spalter beim späteren Verpressen zu vermeiden. In Abhängigkeit vom Klebstoff kann eine Benetzung auf eher feuchten Strands oder auf trockenen Strands günstiger sein. Außerdem sollte während des Pressvorganges möglichst wenig Feuchtigkeit in den Strands vorhanden sein, um den während des Pressvorganges entstehenden Dampfdruck weitestgehend zu reduzieren, da dieser die Rohplatte ansonsten zum Platzen bringen könnte.

Im Anschluss an die Trocknung der Strands werden diese in eine Beleimvorrichtung eingeführt, in welcher der Leim bzw. Klebstoff fein verteilt auf die Späne aufgebracht wird. Zur Verleimung werden überwiegend PMDI- (polymeres Diphenylmethandiisocyanat) oder MUPF-Leime (Melamin-Harnstoff-Phenol-Formaldehyd) eingesetzt. Die Leime können in den OSB auch gemischt eingesetzt werden. Diese Leime werden verwendet, da die OSB wie oben erwähnt häufig für konstruktive Anwendungen genutzt werden. Dort müssen feucht- bzw. nässebeständige Leime verwendet werden.

Nach der Beleimung werden die beleimten Strands in Streuapparaturen alternierend längs und quer zur Produktionsrichtung gestreut, so dass die Strands kreuzweise in mindestens drei Schichten angeordnet sind (untere Deckschicht - Mittelschicht - obere Deckschicht). Die Streurichtung von unterer und oberer Deckschicht ist dabei gleich, weichen jedoch von der Streurichtung der Mittelschicht ab. Auch unterscheiden sich die in der Deckschicht und Mittelschicht verwendeten Strands voneinander. So sind die in den Deckschichten verwendeten Strands flächig und die in der Mittelschicht verwendeten Strands weniger flächig bis hin zu spanförmig. Üblicherweise werden bei der Herstellung der OSB zwei Materialstränge gefahren: einer mit flächigen Strands für die späteren Deckschichten und einer mit "Spänen" für die Mittelschicht. Entsprechend können die Strands in der Mittelschicht qualitativ schlechter sein, da die Biegefestigkeit im Wesentlichen durch die Deckschichten erzeugt wird. Deshalb kann auch Feingut, das beim Zerspanen entsteht, in der Mittelschicht von OSB-Platten verwendet werden.

Im Anschluss an die Streuung der Strands erfolgt ein kontinuierliches Verpressen der selbigen unter hohem Druck und hoher Temperatur von z.B. 200 bis 250°C.

Bei der Herstellung von Holzwerkstoffen (HWS), wie den beschriebenen OSB, wird ein nicht unerheblicher Anteil der Produktkosten durch die Abschreibungen für die extrem teuren Produktionsanlagen verursacht. Dabei tragen die, heute meist verwendeten Contipressen, zu einem erheblichen Anteil zu den Gesamtkosten des Produktes bei. Als limitierender Faktor ist bei Holzwerkstoffen immer die Aushärtung der verwendeten Leime anzusehen. Diese werden in allen Fällen durch thermische Aktivierung gehärtet. Da aber Holz ein thermischer Isolator ist, spielt der Wärmetransport von der Presse in die Späne- oder Faserkuchen eine wichtige Rolle.

Es ist bekannt, dass man durch die Zugabe von Härtern die Aushärtung der Leime beschleunigen kann und damit den Anlagenausstoß erhöhen kann. Dies ist für die in großen Mengen eingesetzten Harnstoff-Formaldehyd-Leime ein erprobtes Verfahren, da die Härter bei Raumtemperatur nur eine geringe oder gar keine Tendenz haben, den Leim zu härten. Dies bedeutet, dass bei kurzen Anlagenstillständen wenig, bis gar keine Voraushärtung stattfindet.

Bei PMDI-Leim verhält sich das anders. Dieser Leim, der insbesondere bei der Herstellung von OSB verwendet wird, reagiert bereits bei Raumtemperatur mit den meisten Härtern (z.B. Amine, Polyole). Häufig haben diese Härter noch das Problem, dass eine Zugabe zu dem PMDI inklusive einer innigen Durchmischung vor dem Auftrag auf die Strands erfolgen muss. Diese Härter werden dabei meist als wässrige Lösungen eingesetzt, was zu einer zusätzlichen Reaktion des PMDI mit dem Wasser zu Polyurethan und zur Ablagerung des Polyurethan führt Daraus ergeben sich Nachteile, insbesondere eine geringere Möglichkeit der Einflussnahme auf den Ausstoß und Produktivität der Produktionsanlage, und höhere Kosten.

EP 3 067 402 A1 offenbart eine wässrige Bindemittelzusammensetzung zur Herstellung von OSB-Platten, welche PMDI und ein Reaktionsprodukt aus Tetraethylorthosilikat, Glycidyloxypropyltriethoxysilan und einer wässrigen Lösung von Sorbit enthält. Durch das genannte Bindemittel wird eine Verringerung der Bindemittelmenge durch geringere Absorption/Diffusion des PMDI-Leims in die Holzfasern im Vergleich zu reinem PMDI-Leim erreicht.

EP 3 995 538 offenbart den getrennten Auftrag einer ersten Leimkomponente, die Zucker/ Zuckeralkohol enthält, auf (Mittelschicht)-Holzspäne, einer zweiten Komponente, umfassend einen Polyvinylalkohol, und den abschliessenden Auftrag einer PMDI-Leimkomponente, um ein Wegschlagen des niedrigviskosen PMDI in die Fügeteile zu vermeiden und den Einsatz dieses Bindemittels für OSB-Holzwerkstoffplatten.

Durch eine Chemikalie, die nicht ein klassischer Härter ist, aber trotzdem eine Beschleunigung der Härtung von PMDI-Leim erreichen würde, könnte möglicherweise die Produktionsmenge signifikant gesteigert werden.

Der vorliegenden Erfindung liegt daher die technische Aufgabe zu Grunde, die Produktivität einer OSB-Anlage zu steigern. Dabei sollen, wenn möglich keine technischen Veränderungen vorgenommen werden müssen. Auch soll sich der Prozess nicht signifikant verteuern.

Diese Aufgabe wird mit einem Verfahren zur Herstellung von OSB mit den Merkmalen des Anspruchs 1 gelöst.

Entsprechend wird ein Verfahren zur Herstellung einer OSB-Holzwerkstoffplatte bereitgestellt, welches die folgenden Schritte umfasst:

a) Bereitstellen von Holzstrands;
b) Beleimen der Holzstrands mit einem Bindemittelsystem umfassend

- eine Komponente A umfassend

  i) mindestens einen Zucker, mindestens einen Zuckeralkohol oder einer Mischung davon, und
  ii) mindestens eine Verbindung der allgemeinen Formel (I)

$$R_a^1SiX_{(4-a)}$$

wobei

- X Alkoxy ist,
- $R^1$ ein organischer Rest ist ausgewählt aus einer Gruppe umfassend C1-C10 Alkyl, die durch -O- oder -NH- unterbrochen sein können
- wobei $R^1$ mindestens eine funktionelle Gruppe $Q_1$ aufweist, die ausgewählt ist aus einer Gruppe enthaltend eine Methacryl-, Methacryloxy-, Vinyl-, Alkoxy-, Amino-, Isocyano- und Epoxid- Gruppe, und
- a = 0, 1, 2, 3, insbesondere 0, 1 oder 2 ist, und

- eine Komponente B bestehend aus mindestens einem Isocyanat,
  wobei die Komponente A und die Komponente B separat voneinander auf die Holzstrands aufgebracht werden,

c) Aufstreuen der beleimten Holzstrands auf ein Transportband; und
d) Verpressen der beleimten Holzstrands zu einer OSB-Holzwerkstoffplatten, und

wobei das Verfahren in einer Produktionsanlage mit einer Steigerung der Anlagengeschwindigkeit von mindestens 10%, bevorzugt von mindestens 15%, insbesondere bevorzugt von mindestens 20%, noch mehr bevorzugt von mindestens 25% im Vergleich zu einer Ausgangsgeschwindigkeit der Produktionsanlage durchgeführt wird.

Im Kontext der vorliegenden Erfindung ist unter einer Steigerung der Anlagengeschwindigkeit eine Beschleunigung der Anlagengeschwindigkeit im Vergleich zu einer Ausgangsgeschwindigkeit der Produktionsanlage zu sehen. Typischerweise werden Produktionsanlagen zur OSB-Herstellung mit einer Geschwindigkeit von bis zu 340 mm/sec gefahren. Wie in den unten angeführten Ausführungsbeispielen zu entnehmen ist, erlaubt das vorliegende Verfahren nunmehr eine Steigerung der Prozess- bzw. Vorschubgeschwindigkeit auf mehr als 340 mm/s, bevorzugt von mehr als 380 mm/sec, insbesondere bevorzugt von $\geq$ 400 mm/sec. So kann die Vorschubgeschwindigkeit bei 400-460 mm/sec, bevorzugt 400-435 mm/sec liegen. Zu beachten ist, dass die absolute Vorschubgeschwindigkeit von der Länge der Produktionsanlage und der Dicke der herzustellenden OSB abhängig ist; d.h. die absolute Vorschubgeschwindigkeit kann von Produktionsanlage zu Produktionsanlage variieren.

Erfindungsgemäß wird ein Verfahren zur OSB-Herstellung bereitgestellt, in welchem Komponente A aus Zucker/Zuckeralkohol und mindestens einem Silan und ein Isocyanat als Komponente B separat auf die Strands bei der Beleimung in einem Mischer (z.B. Trogmischer) oder in einer Beleimtrommel (Coil)zugegeben werden. Es findet somit keine Vermischung der Komponenten des Bindemittelsystems vor dem Auftrag auf die Holzstrands statt, so dass keine ungewünschten Reaktion z.B. des Isocyanats mit Wasser aus einer wässrigen Lösung der Komponente A erfolgen kann. Die Gefahr einer Voraushärtung des Bindemittels wird somit reduziert.

Bei dem in der Komponente A verwendetem Silan handelt es sich eigentlich um einen Primer, der die Haftung des Isocyanats auf den Strands verbessern soll. Das dieser Primer überraschenderweise auch eine Beschleunigung der Produktionsgeschwindigkeit zulässt ist nicht ohne weiteres zu erklären, da die Substanzklasse der Silane nicht für diese Eigenschaft bekannt ist. Der Auftrag des 2-Komponenten-Bindemittelsystems erfolgt entweder vor, mit oder nach dem Isocyanat-Auftrag.

Der separate Auftrag der Komponenten des Bindemittelsystems ermöglicht auch eine schnelle Änderung der Mengenverhältnisse der Komponenten des Bindemittelsystems. Ein weiterer Vorteil besteht darin, dass auf ökologisch schädliche Inhaltsstoffe, wie Schwermetalle und Halogene im Bindemittelsystem verzichtet werden kann.

In einer Ausführungsform umfasst das vorliegende Verfahren die folgenden Schritte:

a) Herstellen von Holzstrands(OSB-Strands) aus geeigneten Hölzern,
b) ggf. Zwischenlagerung der Holzstrands, insbesondere in Silos oder Bunkern,
c) Trocknen der Holzstrands,
d) Sortieren bzw. Sichtung der Holzstrands entsprechend der Größe der Holzstrands,
e) Beleimen der Holzstrands mit dem oben angeführten Bindemittelsystem umfassend eine Komponente A und eine Komponente B,
f) Aufbringen der beleimten Holzsstrands auf ein Transportband mittels Wind- und/oder Wurfsichtung, und
g) Verpressen der auf dem Transportband angeordneten beleimten Holzstrands.

Zusätzlich zu den oben aufgeführten Verfahrensschritten werden die Hackschnitzel vor ihrer Zerkleinerung von Fremdstoffen z.B. im Rahmen einer Trockenreinigung oder Nassreinigung gereinigt.

Zucker der Komponente A

In einer Ausführungsform der Komponente A des vorliegenden Bindemittelsystems werden reduzierende Mono- und/oder Disaccharide verwendet. Unter reduzierenden Mono- oder Disacchariden sind im Sinne der vorliegenden Anmeldung solche Saccharide zu verstehen, die über mindestens eine Aldehydgruppe im linearen Zustand verfügen. Nicht reduzierende Saccharide hingegen verfügen über keine freien Aldehydgruppen. Ein Beispiel für ein nicht reduzierendes Disaccharid ist Saccharose, in welchem die beiden Monosaccharide Glukose und Fruktose unter neutralen und basischen Bedingungen über eine $\alpha,\beta$-1,2- glykosidische Bindung in Acetalform miteinander verbunden vorliegen. Allerdings ist unter sauren Bedingungen eine Spaltung der Saccharose in die reduzierenden Monosaccharide Glukose und Fructose möglich.

In einer bevorzugten Ausführungsform werden als Monosaccharide Pentosen und Hexosen verwendet. Pentosen und Hexosen sind dabei insbesondere ausgewählt aus der Gruppe enthaltend Arabinose, Ribose, Xylose, Glukose (Dextrose), Mannose, Galaktose und Fruktose. Die genannten Saccharide können sowohl in ihrer D- als auch in ihrer L-Form verwendet werden.

In einer weiteren Ausführungsform werden als Zuckeralkohole ausgewählt aus einer Gruppe enthaltend vierwertige, fünfwertige, sechswertige Alkohole (auch bekannt als reduzierte Zucker bzw. Alditole) verwendet. Dabei können als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden. Als besonders vorteilhaft hat sich die Verwendung von Sorbit (bzw. Sorbitol) erwiesen.

Als Polyole oder polyalkoholische Verbindungen werden demnach ausschließlich mehrwertige Alkohole auf Zuckerbasis verwendet. Auf die Verwendung von synthetischen Polyolen wie Glykole, wie Ethylenglykol, Propylenglykol, Diethylenglykol, Triethylenglykol, Polyethylenglykol, Polypropylenglykol, Polybutylenglykol wird demnach verzichtet. Insbesondere wird vorliegend kein 1,2-Propylenglykol als Leimkomponente verwendet.

Silan der Komponente A

Der hydrolysierbare Rest X des Silans der Formel (I) ist vorteilhafterweise ausgewählt aus einer Gruppe enthaltend $C_{1-6}$-Alkoxy, insbesondere Methoxy, Ethoxy, n-Propoxy, i-Propoxy und Butoxy.

Der organische Rest $R^1$ des Silans der allgemeinen Formel (I) ist bevorzugt ausgewählt aus einer Gruppe umfassend C1-C10 Alkyl, bevorzugt C1-C8 Alkyl, die durch -O- oder -NHunterbrochen sein können. Insbesondere bevorzugt sind Methyl, Ethyl, Propyl, Pentyl, Hexyl, Heptyl, Octyl.

In einer Ausführungsform der vorliegenden Zusammensetzung ist die mindestens eine funktionelle Gruppe $Q^1$ des Silans der allgemeinen Formel (I) ausgewählt aus einer Gruppe enthaltend ein Epoxid-, insbesondere ein Glycidyl- oder Glycidyloxy-Gruppe, eine Methacryloxy, eine Vinyl- oder eine Isocyano-Gruppe. Besonders bevorzugte funktionelle Gruppe $Q^1$ ist Glycidyloxy- oder Isocyano-Gruppe. Die funktionelle Gruppe $Q^1$ weist vorteilhafterweise einen Rest mit einer Doppelbindung oder einer Epoxid-Gruppe auf, der mittels UV-Strahlung aktivierbar und polymerisierbar ist.

Die funktionellen Gruppen, über die eine Vernetzung mit dem Polymerklebstoff und der Holzoberfläche möglich ist, umfassen insbesondere polymerisierbare und/oder polykondensierbare Gruppen, wobei unter der Polymerisationsreaktion auch Polyadditionsreaktionen zu verstehen sind. Die funktionellen Gruppen werden bevorzugt so ausgewählt, dass über gegebenenfalls katalysierte Polymerisations- und/oder Kondensationsreaktionen eine organische Vernetzung zwischen dem Polymerklebstoff und der Holzoberfläche und auch ggf. zwischen verschiedenen Klebstoffsystemen ausgeführt werden kann.

In einer bevorzugten Ausführungsform weist die vorliegende Bindemittelzusammensetzung mindestens zwei Verbindungen der allgemeinen Formel (I) auf.

So kann in einer Ausführungsform eine Silanmischung verwendet werden, in der eine erste Verbindung der Formel **SiX$_4$** mit X Alkoxy, insbesondere Methoxy, Ethoxy, n-Propoxy oder i-Propoxy entspricht, und eine zweite Verbindung der Formel **R$_a$SiX$_{(4-a)}$** mit a= 1 oder 2 entspricht, wobei X Alkoxy, insbesondere Methoxy, Ethoxy, n-Propoxy oder i-Propoxy ist, R Methyl, Ethyl, n-Propyl oder n-Butyl ist und Q Glycidyl- oder Glycidyloxy-Gruppe, eine Alkoxy, eine Amino- oder eine Isocyano-Gruppe ist.

In einer weiteren Ausführungsform kann eine Silanmischung verwendet werden, in der eine erste Verbindung der Formel **SiX$_4$** mit X Methoxy, Ethoxy, n-Propoxy oder i-Propoxy entspricht, und eine zweite Verbindung der Formel **R$_a$SiX$_{(4-a)}$** mit a= 1 entspricht, wobei X Methoxy, Ethoxy, n-Propoxy oder i-Propoxy ist, R Methyl, Ethyl, n-Propyl oder n-Butyl ist und Q Glycidyl- oder Glycidyloxy-Gruppe ist.

Hierbei kann das Molverhältnis von erster und zweiter Verbindung 0,1 bis 1 mol, bevorzugt 0,1 bis 0,5 mol, insbesondere bevorzugt 0,1 bis 0,4 mol betragen.

In einer besonders bevorzugten Ausführungsform werden als Silane Tetraethoxysilan, Tetramethoxysilan, Gamma-Isocyanatopropyltriethoxysilan, Glycidyloxypropyltriethoxysilan Glycidyoxypropyltrimethyoxysilan verwendet.

Gemäß einer Variante umfasst die Komponente A eine Silanmischung, in der eine erste Verbindung der Formel **SiX$_4$** mit X Alkoxy, insbesondere Methoxy, Ethoxy, n-Propoxy oder i-Propoxy entspricht, und eine zweite Verbindung der Formel **R$_a$SiX$_{(4-a)}$** mit a= 1 oder 2 entspricht, wobei X Alkoxy, insbesondere Methoxy, Ethoxy, n-Propoxy oder i-Propoxy ist, R Methyl, Ethyl, n-Propyl oder n-Butyl ist und Q Glycidyl- oder Glycidyloxy-Gruppe, eine Alkoxy, eine Amino- oder eine Isocyano-Gruppe ist, und vierwertige Alkohole, wie Threit, Erythrit, Pentaerythrit, fünfwertige Alkohole, wie Arabit, Adonit, Xylit und sechswertige Alkohole wie Sorbit, Mannit, Dulcit, Dipentaerythrit.

Gemäß einer bevorzugten Variante umfasst die Komponente A eine Silanmischung, in der eine erste Verbindung der Formel **SiX$_4$** mit X Methoxy, Ethoxy, n-Propoxy oder i-Propoxy entspricht, und eine zweite Verbindung der Formel **R$_a$SiX$_{(4-a)}$** mit a= 1 entspricht, wobei X Methoxy, Ethoxy, n-Propoxy oder i-Propoxy ist, R Methyl, Ethyl, n-Propyl oder n-Butyl ist und Q Glycidyl- oder Glycidyloxy-Gruppe, und sechswertige Alkohole wie Sorbit, Mannit, Dulcit, Dipentaerythrit.

Gemäß einer besonders bevorzugten Variante umfasst die Komponente A Tetraethoxysilan, Glycidyloxypropyltriethoxysilan, und Sorbitol.

In einer weiteren Ausführungsform ist es möglich, der Komponente A Zusammensetzung Nanopartikel zuzugeben. Die dabei bevorzugt verwendeten Partikel weisen eine Größe zwischen 2 und 400 nm, bevorzugt zwischen 2 bis 100 nm aufweist, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel lonenaustauschprozess, Plasma-Prozess, Sol-Gel Verfahren, Vermahlung oder auch Flammabscheidung, hergestellt werden können. In einer bevorzugten Ausführungsform werden Partikel auf Basis von $SiO_2$, $Al_2O_3$, $ZrO_2$, $TiO_2$, SnO verwendet, wobei besonders bevorzugt nanoskalige $SiO_2$-Partikel in Form einer wässrigen Suspension (z.B. saure Suspension von $SiO_2$ stabilisiert mit $Al^{3+}$ - oder $Na^+$-Kationen) zum Einsatz kommen können.

Die mindestens eine Komponente A aus Silan und Zucker / Zuckeralkohol wird in einer Variante in einer Menge zwischen 0,01 und 0,5 Gew%, bevorzugt zwischen 0,02 und 0,4 Gew%, insbesondere bevorzugt zwischen 0,04 und 0,3 Gew% bezogen auf Holz atro auf die Holzstrands aufgebracht, insbesondere auf die Holzstrands. Holz atro ist die Maßeinheit für die Masse von einer Tonne absolut trockenem Holz.

Die Menge an Komponente A aus mindestens einer Silan-Verbindung der Formel (I) und des mindestens einen Zuckers / Zuckeralkohols kann 0,4 bis 20 Gew%, bevorzugt 0,8 bis 16 Gew%, insbesondere bevorzugt 1,6 bis 12 Gew% bezogen auf die Menge an Isocyanat als Komponente B betragen.

Bevorzugt wird die mindestens eine Komponente A aus Silan und Zucker / Zuckeralkohol als wässrige Lösung mit einer Konzentration von 10-50 Gew%, bevorzugt 12-30 Gew% verwendet und entsprechende Mengen der wässrigen Lösung verwendet, um die entsprechende Endkonzentration der Komponente A auf den Holzstrands und in Bezug auf das Isocyanat zu erreichen.

Die vorliegend verwendete Komponente A der Bindemittelzusammensetzung kann in einem Verfahren umfassend die folgenden Schritte hergestellt werden:

- Bereitstellen von mindestens einer, bevorzugt von mindestens zwei verschiedenen Verbindungen der allgemeinen Formeln (I);
- Zugabe von mindestens einem Zucker oder Zuckeralkohol;
- Zugabe von mindestens einem Katalysator, insbesondere einer Säure, zu der Mischung aus mindestens einer Verbindung der Formel (I) und mindestens einem Zucker / Zuckeralkohol; und
- Ausfällung und Abtrennung des Reaktionsgemisches aus mindestens einer Verbindung der Formel (I) und mindestens einem Zucker / Zuckeralkohol.

Als Katalysator geeignete anorganische und/oder organische Säuren sind ausgewählt aus einer Gruppe enthaltend Phosphorsäure, Essigsäure, *p*-Toluolsulfonsäure, Salzsäure, Ameisensäure oder Schwefelsäure. Ebenfalls geeignet sind Ammoniumsalze wie Ammoniumsulfat, die als schwache Säuren reagieren. *p*-Toluolsulfonsäure ist besonders bevorzugt.

Zum Ausfällen des Reaktionsgemisches aus mindestens einer Verbindung der Formel (I) und mindestens einem Zucker / Zuckeralkohol hat sich als besonders geeignet die Verwendung von Natriumglycerophosphat erwiesen. Als weitere Ausfällungsmittel kommen auch Laugen wie NaOH, KOH, bzw. Ammoniumhydroxyd Lösungen in Betracht.

Isocyanat als Komponente B

In einer Ausführungsform basiert das mindestens eine Isocyanat auf aromatischen Polyisocyanaten, insbesondere Polydiphenylmethandiisocyanat (PMDI), Toluylendiisocyanat (TDI) und/oder Diphenylmethandiisocyanat (MDI), wobei PMDI besonders bevorzugt ist.

Das mindestens eine Isocyanat wird in einer Variante in einer Menge zwischen 2 und 5 Gew%, bevorzugt zwischen 2,2 und 4 Gew%, insbesondere bevorzugt zwischen 2,5 und 3 Gew% bezogen auf Holz atro verwendet, insbesondere auf die Holzstrands und/oder Holzspäne aufgesprüht.

Das vorliegende wässrige Bindemittelsystem weist bevorzugt außer dem Zucker, Zuckeralkohol und dem Isocycanat keine weiteren Komponenten auf. So ist es frei von Formaldehyd, synthetischen Polyolen und/oder Kunststoffen und Verdickungsmitteln, insbesondere Polyvinylalkohol oder Polyvinylacetat, oder auch Acrylaten.

Die Bindemittelkomponenten werden erfindungsgemäß als separate Komponenten auf die Holzstrands aufgesprüht werden. Die Komponente A kann dabei vor, mit oder nach dem Auftrag des Isocyanats als Komponente B aufgebracht werden.

Wie oben angeführt, wird die Komponente A in Form einer wässrigen Lösung auf die Holzstrands aufgebracht. Würde das als Komponente B verwendete Isocyanat nun mit der wässrigen Lösung der Komponente A in Kontakt, würde das Isocyanat leicht mit Wasser unter Ausbildung von Poylurethan reagieren, wobei das gebildete Polyurethan sich in dem Mischer ablagert und Leitungen oder Sprühköpfe des Mischers verstopft. Um dies zu vermeiden, ist es daher von Vorteil die Bindemittelkomponenten erfindungsgemäß separat voneinander bereitzustellen und separat voneinander auf die Holzstrands aufzusprühen.

Mischer /Coil

Das Aufbringen der Bindemittelkomponenten kann in einer Beleimtrommel (Coil) oder einem Trogmischer erfolgen.

Eine für das vorliegende Verfahren verwendete Beleimungseinrichtung in Form eines Coils besteht aus einem Zylinder und mindestens einem Versorgungsbalken für die Zufuhr von Klebstoff und Druckluft mit Sprühtellern, für deren Antrieb in Gehäusen angeordnete pneumatische Antriebsmotoren vorgesehen sind. Ein derartige Beleimungseinrichtung ist in der DE 10 2008 046 637 A1 beschreiben.

Ein geeigneter Trogmischer wird z.B. von der Firma Dieffenbacher vertrieben. Derartige Leimmischer sorgen durch ihr großes Kammervolumen und die optimale Verweilzeit des Materials für eine gleichmäßige Leimverteilung. Um ein optimales Beleimergebnis zu gewährleisten, wird der konstante Füllstand des Mischers durch eine Auslassklappe aufrechterhalten.

Nach dem Auftragen der Bindemittelkomponenten auf die Holzstrands werden die beleimten Holzstrands auf einem Transportband abgelegt oder aufgestreut und anschließend zu einer OSB-Holzwerkstoffplatte verpresst.

Das Verpressen kann bei einer Presstemperatur zwischen 150 und 250°C, bevorzugt 180°C und 220°C, und einer Presszeit zwischen 30 und 240 sec, bevorzugt 100 und 210 sec, insbesondere 150 und 180sec erfolgen.

OSB-Platte

Erfindungsgemäß werden mit dem vorliegenden Verfahren Grobspanplatten, auch OSB (oriented strand boards) genannt, hergestellt.

Die mit dem vorliegenden Verfahren hergestellten OSB weisen somit eine Bindemittelzusammensetzung auf, umfassend

- mindestens eine Komponente A aus mindestens einem Silan der Formel (I) und mindestens einem Zucker, mindestens einem Zuckeralkohol, oder einer Mischung;
- mindestens eine Komponente B umfassend mindestens ein Isocyanat.

Wie oben angeführt, werden Grobspanplatten, auch OSB (oriented strand boards) genannt, aus langen Spänen (strands) in einem mehrstufigen Prozess hergestellt.

In einem ersten Schritt werden Strands aus entrindetem Rundholz, bevorzugt Nadelhölzer, in Längsrichtung durch rotierende Messer abgeschält.

Die so hergestellten Holzstrands können eine Länge zwischen 50 bis 200 mm, bevorzugt 70 bis 180 mm, insbesondere bevorzugt 90 bis 150 mm; eine Breite zwischen 5 bis 50 mm, bevorzugt 10 bis 30 mm, insbesondere bevorzugt 15 bis 20 mm; und eine Dicke zwischen 0,1 und 2 mm, bevorzugt zwischen 0, 3 und 1,5 mm, insbesondere bevorzugt zwischen 0, 4 und 1 mm aufweisen.

In einer Ausführungsform weisen die Holzstrands z.B. eine Länge zwischen 150 und 200 mm, eine Breite zwischen 15 und 20 mm, eine Dicke zwischen 0,5 und 1 mm und eine Feuchte von max. 50% auf.

Wie oben beschrieben, bestehen OSB typischerweise aus zwei Deckschichten, die eine Mittelschicht begrenzen, wobei Deckschichten und Mittelschicht aus unterschiedlichen Arten von Holzstrands bestehen können. So können in den Deckschichten flächige Strands verwendet werden, während in der Mittelschicht qualitativ schlechtere Strands (oder auch Späne) zum Einsatz kommen können.

Es ist ebenfalls möglich, in den Deckschichten und in der Mittelschicht unterschiedliche Arten von Bindemittelsystemen zu verwenden.

So kann in einer Ausführungsform vorgesehen sein, die Holzstrands für Deckschicht(en) und Mittelschicht der OSB jeweils mit dem Bindemittelsystem aus Komponente A und Komponente B zu versehen.

Es ist auch möglich, dass gemäß einer weiteren Ausführungsform nur die Holzstrands für die Mittelschicht der OSB mit dem Bindemittelsystem aus Komponente A und Komponente B versehen werden, und die Holzstrands für die Deckschicht(en) nur mit Isocyanat als Bindemittel zu versehen.

In beiden soeben beschriebenen Ausführungsformen ist die Menge an in der Deckschicht verwendeten Isocyanat etwas erhöht gegenüber der in der Mittelschicht verwendeten Menge an Isocyanat.

So wird das Isocyanat auf Holzstrands für die Deckschichten in einer Menge zwischen 2,5 und 3,5 Gew%, bevorzugt zwischen 2,7 und 3,2 Gew%, insbesondere bevorzugt zwischen 2,9 und 3,0 Gew% bezogen auf Holz atro aufgetragen.

Hingegen beträgt die Menge an Isocyanat aufgetragen auf Holzstrands für die Mittelschicht zwischen 2 und 3 Gew%, bevorzugt zwischen 2,2 und 2,8 Gew%, insbesondere bevorzugt zwischen 2,4 und 2,6 Gew% bezogen auf Holz atro.

Die mit dem beschriebenen Verfahren hergestellten Grobspanplatten (OSB) weisen eine Querzugsfestigkeit von größer als $0,3 \text{ N/mm}^2$, bevorzugt von größer $0,4 \text{ N/mm}^2$, bevorzugt von größer $0,45 \text{ N/mm}^2$, insbesondere bevorzugt größer $0,5 \text{ N/mm}^2$ auf. Die Querzugsfestigkeit kann in einem Bereich zwischen 0,3 und $0,6 \text{ N/mm}^2$, bevorzugt zwischen 0,4 und $0,6 \text{ N/mm}^2$, insbesondere bevorzugt zwischen 0,45 und $0,55 \text{ N/mm}^2$ liegen.

Des Weiteren weisen die mit dem beschriebenen Verfahren hergestellten Grobspanplatten (OSB) E-Module in Längsrichtung zwischen 3200 und 4000 MPa, bevorzugt zwischen 3400 und 3800 MPa und E-Module in Querrichtung zwischen 1400 und 1800 MPa, bevorzugt zwischen 1500 und 1600 MPa auf.

Die vorliegende OSB-Holzwerkstoffplatte kann eine Rohdichte zwischen 300 und 1000 $\text{kg/m}^3$, bevorzugt zwischen 500 und 800 $\text{kg/m}^3$, insbesondere bevorzugt zwischen 600 und 700 $\text{kg/m}^3$ aufweisen.

Die Dicke der vorliegenden OSB-Holzwerkstoffplatte kann zwischen 5 und 50 mm, bevorzugt zwischen 8 und 40 mm betragen, wobei insbesondere eine Dicke zwischen 8 und 30 mm bevorzugt ist.

Die Erfindung wird nachfolgend an mehreren Ausführungsbeispielen näher erläutert.

**Ausführungsbeispiel 1:** Herstellen der Komponente A des Bindemittelsystems

Zu einer Mischung bestehend aus 20,33 g Tetraethylorthosilikat (0,1 mol) und 139,2 Glycidyloxypropyltriethoxysilan (0,5 mol) wird unter Rühren eine Mischung aus 34,2 g Sorbitol (50 Gew % in dem. Wasser) und 4 g para-Toluolsulfonsäure gegeben. Hierbei erfolgen eine Hydrolyse der Silanmischung und eine Reaktion mit dem Sorbit, wobei der Kondensationsgrad bewusst niedrig gehalten wird. Der Reaktionsverlauf und der Kondensationsgrad werden mittels Si-NMR-Messungen verfolgt.

Nach einer Rührzeit von 4 Stunden wird eine Mischung aus 136,8 g demin. Wasser und 34 g Natriumgylcerophophsat dem obigen Reaktionsgemisch zugegeben. Diese Mischung wird weitere 60 Minuten gerührt.

Nach einer Ruhezeit von ca. 1 Stunde bildet sich ein zweiphasiges Gemisch. Die untere nun wässrige Phase enthaltend das Reaktionsprodukt aus Silanen und Sorbit wird von der oberen Alkoholphase getrennt und als Komponente A verwendet.

**Ausführungsbeispiel 2:**

An einer OSB-Linie werden die Deckschicht (DS)strands im Coil mit 2,9 Gew% PMDI auf Holz atro besprüht. In der Mittelschicht (MS) erfolgt in einem Trogmischer die Zugabe von 2,5 Ge% PMDI auf Holz atro. Zusätzlich wird in der Mittelschicht (MS) die Komponente A in einer Menge von 1,6 Gew% bezogen auf PMDI (0,04 Gew% auf Holz atro) zugegeben. Die Komponente A wurde dabei in einer Konzentration von 12,5% eingesetzt. Die Lieferkonzentration lag bei 50 Gew%.

Vor der Zugabe der Komponente A wurde zunächst eine Nullprobe ohne Silan-Komponente A (Plattenstärke: 18 mm) bei der üblicherweise durch die Qualitätsparameter vorgegebenen Maximalgeschwindigkeit von 340 mm/sec gezogen. Nach dem Start der Silanzugabe wurde wieder eine Probe gezogen. Dann wurde die Produktionsgeschwindigkeit auf 400 bzw. 435 mm/sec gesteigert. Dies war die Maximalgeschwindigkeit, die mit der vorhandenen Spanmenge für die Mittelschicht produziert werden konnte. Dies entspricht einer Anlagengeschwindigkeitssteigerung von 27%. Bei beiden Geschwindigkeiten wurden Proben gezogen. Am Schluss wurde bei 435 mm/sec noch eine Probe ohne Silan gezogen. Die Proben wurden nach dem Abkühlen auf einige wichtige technologische Werte untersucht.

| Nr.<br>Parameter | 1 | 2 | 3 | 4 | 5 |
|---|---|---|---|---|---|
| Stärke der OSB in mm | 18 | 18 | 18 | 18 | 18 |
| Vorschub in mm/sec | 340 | 340 | 400 | 435 | 435 |

| | 1 | 2 | 3 | 4 | 5 |
|---|---|---|---|---|---|
| Presszeitfaktor (PZF) in sec/mm | 4,8 | 4,8 | 4,0 | 3,7 | 3,7 |
| Beleimung PMDI<br>MS in % auf Holz<br>DS in % auf Holz | 2,5<br>2,9 | 2,5<br>2,9 | 2,5<br>2,9 | 2,5<br>2,9 | 2,5<br>2,9 |
| Dosierung Komponente A (Silan und Sorbit) MS in % auf Holz | 0 | 0,04 | 0,04 | 0,04 | 0 |
| Dichte der OSB in kg/m$^3$ | 602 | 606 | 594 | 576 | 580 |
| Querzug der OSB in N/mm$^2$ | 0,38 | 0,48 | 0,44 | 0,41 | 0,31 |
| E-Modul der OSB in MPa<br>Längs<br>Quer | 3540<br>1560 | 3855<br>1681 | 3790<br>1620 | 3490<br>1490 | 3240<br>1410 |

Wie aus der Tabelle zu entnehmen ist wird von allen Proben, der gemäß Norm DIN EN 300, 09/2006: Platten aus langen, flachen, ausgerichteten Spänen (OSB) - Definitionen, Klassifizierung und Anforderungen, geforderte Mindestwert bei der Querzugfestigkeit von 0,3 N/mm$^2$ für OSB 3 erreicht. Beim E-Modul unterschreitet die Probe 4 die geforderten Werte (3500 und 1400 MPa) leicht und die Probe 5 deutlich. In allen Fällen ist zu beobachten, dass die Werte mit Silan deutlich über den Vergleichswerten ohne Silan liegen. Auch die technologischen Werte, die für die Probe mit Silan bei der Maximalgeschwindigkeit ermittelt wurden, liegen noch auf dem Niveau der Probe 1.

**Ausführungsbeispiel 3:**

An einer OSB-Linie werden die Deckschicht (DS)strands im Coil mit 2,9 Gew% PMDI auf Holz atro besprüht. In der Mittelschicht (MS) erfolgt in einem Trogmischer die Zugabe von 2,5 Gew% PMDI auf Holz atro. Diese OSB wurde als Nullprobe produziert. Dann wurde sowohl in der Deckschicht (DS) als auch in der Mittelschicht (MS) die Silan-haltige Komponente A zugegeben.

In der Deckschicht (DS) wurde 1,6 Gew% Silan-haltige Komponente A auf PMDI (0,05 Gew% auf Holz atro) dosiert. In der Mittelschicht (MS) wurden 2,5 Gew% Silan-haltige Komponente A auf PMDI (0,06 Gew% auf Holz atro) dosiert. Das Silan wurde dabei in einer Konzentration von 12,5% eingesetzt. Die Lieferkonzentration lag bei 50 Gew%.

Vor der Silanzugabe wurde zunächst die Nullprobe ohne Silan (Plattenstärke: 18 mm) bei der üblicherweise durch die Qualitätsparameter vorgegebenen Maximalgeschwindigkeit von 340 mm/sec gezogen. Nach dem Start der Silanzugabe wurde wieder eine Probe gezogen. Dann wurde die Produktionsgeschwindigkeit auf 400 bzw. 460 mm/sec gesteigert. Diese Geschwindigkeit konnte lediglich kurze Zeit wegen des entstehenden Spanmangels für die Mittelschicht produziert werden. Es konnten aber die benötigten Proben gezogen werden. Dies entspricht einer Anlagengeschwindigkeitssteigerung von 27%. Bei beiden Geschwindigkeiten wurden Proben gezogen. Am Schluss wurde versucht bei 460 mm/sec noch eine Probe ohne Silan zu ziehen. Allerdings traten dort Spalter auf. Die Proben wurden nach dem Abkühlen auf einige wichtige technologische Werte untersucht.

| Nr. | 1 | 2 | 2 | 3 | 4 |
|---|---|---|---|---|---|
| Parameter | | | | | |
| Stärke in mm | 18 | 18 | 18 | 18 | 18 |
| Vorschub in mm/sec | 340 | 340 | 400 | 460 | 460 |
| Presszeitfaktor (PZF) in sec/mm | 4,8 | 4,8 | 4,0 | 3,5 | 3,5 |
| Beleimung PMDI MS in % auf Holz | 2,5 | 2,5 | 2,5 | 2,5 | 2,5 |
| DS in % auf Holz | 2,9 | 2,9 | 2,9 | 2,9 | 2,9 |
| Dosierung Komponente A (Silan und Sorbit) MS in % auf Holz | 0 | 0,06 | 0,06 | 0,06 | 0 |
| DS in % auf Holz | 0 | 0,05 | 0,05 | 0,05 | 0 |
| Dichte der OSB in kg/m$^3$ | 608 | 600 | 611 | 599 | - |
| Querzug der OSB in N/mm$^2$ | 0,38 | 0,53 | 0,47 | 0,41 | - |
| E-Modul der OSB in MPa Längs | 3550 | 3931 | 3820 | 3603 | - |
| Quer | 1580 | 1699 | 1666 | 1590 | |

Auch bei diesem Versuch konnte die Geschwindigkeit deutlich gesteigert werden. Bei dem Vorschub von 460 mm/sec konnte ohne GS 55 keine OSB mehr produziert werden.

Es ergeben sich Vorteile

- Deutliche Erhöhung der Produktionsmengen
- Reduzierung der Gefahr der Voraushärtung
- Kostenreduzierung

**Patentansprüche**

1. Verfahren zur Herstellung einer OSB-Holzwerkstoffplatte umfassend die folgenden Schritte:

   a) Bereitstellen von Holzstrands;
   b) Beleimen der Holzstrands mit einem Bindemittelsystem umfassend

   - eine Komponente A umfassend

      iii) mindestens einen Zucker, mindestens einen Zuckeralkohol oder einer Mischung davon, und
      iv) mindestens eine Verbindung der allgemeinen Formel (I)

$$R_a^1SiX_{(4-a)}$$

   wobei

      - X Alkoxy ist,
      - $R^1$ ein organischer Rest ist ausgewählt aus einer Gruppe umfassend C1-C10 Alkyl, die durch -O- oder -NH- unterbrochen sein können
      - wobei $R^1$ mindestens eine funktionelle Gruppe $Q_1$ aufweist, die ausgewählt ist aus einer Gruppe enthaltend eine Methacryl-, Methacryloxy-, Vinyl-, Alkoxy-, Amino-, Isocyano- und Epoxid- Gruppe, und
      - a = 0, 1, 2, 3, insbesondere 0, 1 oder 2 ist, und

   - eine Komponente B bestehend aus mindestens einem Isocyanat,

wobei die Komponente A und die Komponente B separat voneinander auf die Holzstrands aufgebracht werden,
c) Aufstreuen der beleimten Holzstrands auf ein Transportband; und
d) Verpressen der beleimten Holzstrands zu einer OSB-Holzwerkstoffplatten, und

wobei das Verfahren in einer Produktionsanlage mit einer Steigerung der Anlagengeschwindigkeit von mindestens 10%, bevorzugt von mindestens 15%, insbesondere bevorzugt von mindestens 20%, noch mehr bevorzugt von mindestens 25% im Vergleich zur Ausgangsgeschwindigkeit der Produktionsanlage durchgeführt wird.

2. Verfahren nach Anspruch 1, **dadurch gekennzeichnet, dass** der mindestens eine Zucker der Komponente A ein Monosaccharid aus der Gruppe der Pentosen und Hexosen, insbesondere ausgewählt aus der Gruppe enthaltend Arabinose, Ribose, Xylose, Glucose (Dextrose), Mannose, Galactose und Fructose ist.

3. Verfahren nach einem der Ansprüche 1-2, **dadurch gekennzeichnet, dass** der mindestens eine Zuckeralkohol der Komponente A ausgewählt ist aus einer Gruppe enthaltend vierwertige, fünfwertige, sechswertige Alkohole, wobei als vierwertige Alkohole Threit, Erythrit, Pentaerythrit, als fünfwertige Alkohole Arabit, Adonit, Xylit und als sechswertige Alkohole Sorbit, Mannit, Dulcit, Dipentaerythrit verwendet werden.

4. Verfahren nach einem der vorhergehenden Ansprüche, **dadurch gekennzeichnet, dass** der Rest X des Silans der Formell (I) ausgewählt ist aus einer Gruppe enthaltend $C_{1-6}$-Alkoxy, insbesondere Methoxy, Ethoxy, n-Propoxy, i-Propoxy und Butoxy.

5. Verfahren nach einem der vorhergehenden Ansprüche, **dadurch gekennzeichnet, dass** der organische Rest $R^1$ des Silans der Formel (I) ausgewählt ist aus einer Gruppe umfassend C1-C10 Alkyl, bevorzugt C1-C8 Alkyl, die durch -O- oder -NHunterbrochen sein können.

6. Verfahren nach einem der vorhergehenden Ansprüche, **dadurch gekennzeichnet, dass** die mindestens eine funktionelle Gruppe $Q^1$ des Silans der Formel (I) ausgewählt ist aus einer Gruppe enthaltend ein Epoxid-, insbesondere ein Glycidyl- oder Glicidyloxy-Gruppe, eine Methacryloxy, oder eine Isocyano-Gruppe.

7. Verfahren nach einem der vorhergehenden Ansprüche, **dadurch gekennzeichnet, dass** mindestens zwei Silanverbindungen der Formel (I) verwendet werden.

8. Verfahren nach einem der vorhergehenden Ansprüche, **dadurch gekennzeichnet, dass** die mindestens eine Komponente A aus Silan und Zucker / Zuckeralkohol in einer Menge zwischen 0,01 und 0,5 Gew%, bevorzugt zwischen 0,02 und 0,1 Gew%, insbesondere bevorzugt zwischen 0,04 und 0,08 Gew% bezogen auf Holz atro auf die Holzstrands aufgebracht wird.

9. Verfahren nach einem der vorhergehenden Ansprüche, **dadurch gekennzeichnet, dass** das mindestens eine Isocyanat Polydiphenylmethandiisocyanat (PMDI), Toluylendiisocyanat (TDI) und/oder Diphenylmethandiisocyanat (MDI) ist.

10. Verfahren nach einem der vorhergehenden Ansprüche, **dadurch gekennzeichnet, dass** das mindestens eine Isocyanat in einer Menge zwischen 2 und 5 Gew%, bevorzugt zwischen 2,2 und 4 Gew%, insbesondere bevorzugt zwischen 2,5 und 3 Gew% bezogen auf Holz atro auf die Holzstrands aufgebracht wird.

11. Verfahren nach einem der vorhergehenden Ansprüche, **dadurch gekennzeichnet, dass** die Holzstrands für Deckschicht(en) und Mittelschicht der OSB jeweils mit dem Bindemittelsystem aus Komponente A und Komponente B versehen werden.

12. Verfahren nach einem der Ansprüche 1-10, **dadurch gekennzeichnet, dass** nur die Holzstrands für die Mittelschicht der OSB mit dem Bindemittelsystem aus Komponente A und Komponente B versehen werden, und die Holzstrands für die Deckschicht(en) nur mit Isocyanat als Bindemittel versehen werden.

**Claims**

1. A process of manufacturing an OSB wood-based panel comprising the following steps:

a) Providing wood strands;
b) Gluing the wood strands with a binder system comprising

- a component A comprising

i) at least one sugar, at least one sugar alcohol or a mixture thereof, and
ii) at least one compound of the general formula (I)

$$R_a^1 \, SiX_{(4-a)}$$

whereby

- X is alkoxy,
- $R^1$ is an organic moiety selected from a group comprising C1-C10 alkyl, which may be interrupted by -O- or -NH-
- wherein $R^1$ comprises at least one functional group $Q_1$ selected from a group comprising a methacrylic, methacryloxy, vinyl, alkoxy, amino, isocyano and epoxy group, and
- a = 0, 1, 2, 3, in particular 0, 1 or 2, and

- a component B consisting of at least one isocyanate,
where component A and component B are applied separately to the wooden strands,

c) spreading the glued wood strands onto a conveyor belt; and
d) pressing the glued wood strands into an OSB wood-based panel, and

wherein the process is carried out in a production plant with an increase in plant speed of at least 10%, preferably of at least 15%, more preferably of at least 20%, even more preferably of at least 25% compared to the initial speed of the production plant.

**2.** Process according to claim 1, **characterized in that** the at least one sugar of component A is a monosaccharide from the group of pentoses and hexoses, in particular selected from the group comprising arabinose, ribose, xylose, glucose (dextrose), mannose, galactose and fructose.

**3.** Process according to one of claims 1-2, **characterized in that** the at least one sugar alcohol of component A is selected from a group comprising tetravalent, pentavalent, hexavalent alcohols, wherein the tetravalent alcohols used are threit, erythritol, pentaerythritol, the pentavalent alcohols used are arabitol, adonitol, xylitol and the hexavalent alcohols used are sorbitol, mannitol, dulcitol, dipentaerythritol.

**4.** Process according to one of the preceding claims, **characterized in that** the moiety X of the silane of formula (I) is selected from a group comprising $C_{1-6}$ -alkoxy, in particular methoxy, ethoxy, n-propoxy, i-propoxy and butoxy.

**5.** Process according to one of the preceding claims, **characterized in that** the organic moiety $R^1$ of the silane of formula (I) is selected from a group comprising C1-C1 0 alkyl, preferably C1-C8 alkyl, which may be interrupted by -O- or -NH-.

**6.** Process according to one of the preceding claims, **characterized in that** the at least one functional group $Q^1$ of the silane of formula (I) is selected from a group comprising an epoxide group, in particular a glycidyl or glycidyloxy group, a methacryloxy, or an isocyano group.

**7.** Process according to one of the preceding claims, **characterized in that** at least two silane compounds of the formula (I) are used.

**8.** Process according to one of the preceding claims, **characterized in that** the at least one component A comprising silane and sugar/sugar alcohol is applied to the wood strands in an amount of between 0.01 and 0.5% by weight, preferably between 0.02 and 0.1% by weight, more preferably between 0.04 and 0.08% by weight relative to wood atro.

9. Process according to one of the preceding claims, **characterized in that** the at least one isocyanate is polydiphenylmethane diisocyanate (PMDI), toluene diisocyanate (TDI) and/or diphenylmethane diisocyanate (MDI).

10. Process according to one of the preceding claims, **characterized in that** the at least one isocyanate is applied to the wood strands in an amount of between 2 and 5% by weight, preferably between 2.2 and 4% by weight, in particular preferably between 2.5 and 3% by weight relative to wood atro.

11. Process according to one of the preceding claims, **characterized in that** the wood strands for the top layer(s) and middle layer of the OSB are each provided with the binder system comprising component A and component B.

12. Process according to one of claims 1-10, **characterized in that** only the wood strands for the middle layer of the OSB are provided with the binder system comprising component A and component B, and the wood strands for the top layer(s) are provided only with isocyanate as binder.

**Revendications**

1. Procédé de fabrication d'un panneau en matériau dérivé du bois OSB [« Oriented Strand Board » - panneau de particules orientées] comprenant les étapes suivantes :

   a) la fourniture de particules orientées ;
   b) l'encollage des particules orientées avec un système de liant comprenant

     - un composant A comprenant

       iii) au moins un sucre, au moins un alcool de sucre ou un mélange de ceux-ci, et
       iv) au moins un composé de la formule (I) générale

$$R_a^1SiX_{(4-a)}$$

       dans lequel

       - X est un alcoxy,
       - $R^1$ est un radical organique choisi parmi un groupe comprenant un alkyle en $C_1$-$C_{10}$, qui peut être interrompu par -O- ou -NH-,
       - dans lequel $R^1$ présente au moins un groupe fonctionnel $Q_1$, qui est choisi parmi un groupe contenant un groupe méthacrylique, méthacryloxy, vinyle, alcoxy, amino, isocyano et époxyde, et
       - a = 0, 1, 2, 3, en particulier est 0, 1 ou 2, et
       - un composant B constitué d'au moins un isocyanate,

     dans lequel le composant A et le composant B sont appliqués séparément l'un de l'autre sur les particules orientées,
     c) la dispersion des particules orientées encollées sur une bande de transport ; et
     d) la compression des particules orientées encollées en un panneau en matériau dérivé du bois OSB, et

   dans lequel le procédé est mis en oeuvre dans une installation de production avec une augmentation de la vitesse d'installation d'au moins 10 %, de manière préférée d'au moins 15 %, en particulier de manière préférée d'au moins 20 %, de manière davantage préférée d'au moins 25 % en comparaison avec la vitesse de départ de l'installation de production.

2. Procédé selon la revendication 1, **caractérisé en ce que** l'au moins un sucre du composant A est un monosaccharide issu du groupe des pentoses et des hexoses, en particulier choisi parmi le groupe contenant de l'arabinose, du ribose, du xylose, du glucose (dextrose), du mannose, du galactose et du fructose.

3. Procédé selon l'une quelconque des revendications 1 - 2, **caractérisé en ce que** l'au moins un alcool de sucre du composant A est choisi parmi un groupe contenant des alcools tétravalents, pentavalents, hexavalents, dans lequel sont utilisés en tant qu'alcools tétravalents du thréitol, de l'érythritol, du pentaérythritol, sont utilisés en tant qu'alcools pentavalents de l'arabitol, de l'adonitol, du xylitol, et sont utilisés en tant qu'alcools hexavalents du sorbitol, du mannitol, du dulcitol, du dipentaérythritol.

4.  Procédé selon l'une quelconque des revendications précédentes, **caractérisé en ce que** le radical X du silane de la formule (I) est choisi parmi un groupe contenant de l'alcoxy en $C_1$-$C_6$, en particulier du méthoxy, de l'éthoxy, du n-propoxy, du i-propoxy et du butoxy.

5.  Procédé selon l'une quelconque des revendications précédentes, **caractérisé en ce que** le radical organique $R^1$ du silane de la formule (I) est choisi parmi un groupe comprenant de l'alkyle en $C_1$-$C_{10}$, de manière préférée de l'alkyle en $C_1$-$C_8$, qui peuvent être interrompus par -O- ou -NH-.

6.  Procédé selon l'une quelconque des revendications précédentes, **caractérisé en ce que** l'au moins un groupe fonctionnel $Q^1$ du silane de la formule (I) est choisi parmi un groupe contenant un groupe époxyde, en particulier un groupe glycidyle ou glycidyloxy, un groupe méthacryloxy ou un groupe isocyano.

7.  Procédé selon l'une quelconque des revendications précédentes, **caractérisé en ce qu'**au moins deux composés de silane de la formule (I) sont utilisés.

8.  Procédé selon l'une quelconque des revendications précédentes, **caractérisé en ce que** l'au moins un composant A composé de silane et de sucre/d'alcool de sucre est appliqué en une quantité entre 0,01 et 0,5 % en poids, de manière préférée entre 0,02 et 0,1 % en poids, en particulier de manière préférée entre 0,04 et 0,08 % en poids par rapport au bois atro (complètement sec) sur les particules orientées.

9.  Procédé selon l'une quelconque des revendications précédentes, **caractérisé en ce que** l'au moins un isocyanate est un diisocyanate de polydiphénylméthane polymère (PMDI), un diisocyanate de toluylène (TDI) et/ou un diisocyanate de diphénylméthane (MDI).

10. Procédé selon l'une quelconque des revendications précédentes, **caractérisé en ce que** l'au moins un isocyanate est appliqué en une quantité entre 2 et 5 % en poids, de manière préférée entre 2,2 et 4 % en poids, en particulier de manière préférée entre 2,5 et 3 % en poids, par rapport au bois atro sur les particules orientées.

11. Procédé selon l'une quelconque des revendications précédentes, **caractérisé en ce que** les particules orientées pour une couche/des couches de recouvrement et la couche centrale du panneau OSB sont pourvues respectivement du système de liant composé du composant A et du composant B.

12. Procédé selon l'une quelconque des revendications 1-10, **caractérisé en ce que** seulement les particules orientées pour la couche centrale du panneau OSB sont pourvues du système de liant composé du composant A et du composant B, et les particules orientées pour la couche/les couches de recouvrement sont pourvues seulement d'isocyanate en tant que liant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3067402 A1
- EP 3995538 A

- DE 102008046637 A1